# EUROPEAN PATENT SPECIFICATION

(11) **EP 2 460 141 B1**
(45) Date of publication and mention of the grant of the patent: **17.04.2013**
(21) Application number: 10742292.5
(22) Date of filing: 23.07.2010
(51) Int. Cl.: G06T 5/00, G06T 5/20

(54) **METHOD OF FILTERING A SIGNAL AND OF OBTAINING FILTER COEFFICIENTS**
VERFAHREN ZUR FILTERUNG EINES SIGNALS UND ZUR GEWINNUNG VON FILTERKOEFFIZIENTEN
PROCÉDÉ PERMETTANT DE FILTRER UN SIGNAL ET D OBTENIR DES COEFFICIENTS DE FILTRAGE

(30) Priority: 30.07.2009 EP 09305717
(43) Date of publication of application: 06.06.2012
(73) Proprietor: TP Vision Holding B.V., 5656 AE Eindhoven (NL)
(72) Inventor: VAN DER VEN, John, Cornelius, Petrus, NL-5656 AE Eindhoven (NL); TEGENBOSCH, Jeroen, Arnoldus, Paulus, NL-5656 AE Eindhoven (NL)
(74) Representative: Hutter, Jacobus Johannes
(86) International application number: PCT/IB2010/053360
(87) International publication number: WO 2011/013045

(56) References cited:
- US-A1- 2009 161 977
- US-B1- 6 351 494
- LING SHAO ET AL: "An Overview and Performance Evaluation of Classification-Based Least Squares Trained Filters" IEEE TRANSACTIONS ON IMAGE PROCESSING, IEEE SERVICE CENTER, PISCATAWAY, NJ, US LNKD- DOI:10.1109/TIP.2008.2002162, vol. 17, no. 10, 1 October 2008 (2008-10-01), pages 1772-1782, XP011234236 ISSN: 1057-7149

## Description

### FIELD OF THE INVENTION

The invention relates to a method of filtering a signal, including:
determining a class of a section of the signal obtained as input, wherein the determination of the class includes calculating a signal section comprising at least a component representative of a derivative of at least a first order of the input signal section and applying a quantisation operation to the calculated signal section; and
selecting a digital filter associated with the class from a plurality of available filters.

The invention also relates to a device for filtering a signal, including:
an input for receiving the signal;
a device component for determining a class of a section of the signal obtained as input, the device component including a signal processing component for calculating a signal section comprising at least a component representative of a derivative of at least a first order of the input signal section and a signal processing component for applying a quantisation operation to the calculated signal section; and
a switch for switching between a plurality of available digital filters.

The invention also relates to a device for rendering at least one image on a display, comprising an interface for receiving a signal encoding at least one image and a filter device for filtering a digital signal representative of the at least one image.

The invention also relates to a method of obtaining filter coefficients of a plurality of filters, including:
obtaining a plurality of test signal sections and associated target signal values, each test signal section associated with one of a plurality of classes;
for each class, optimising a set of filter coefficients of an associated filter such that filtered versions of the test signal sections associated with that class best approximate their associated target signal values; and
associating each optimised set of filter coefficients with a class code obtainable by:
   for any test signal section associated with the class associated with the optimised set of filter coefficients, calculating a signal section comprising at least a component representative of a derivative of at least a first order the test signal section and applying a quantisation operation to the calculated signal section.

The invention also relates to a computer program.

### BACKGROUND OF THE INVENTION

US 6,192,161 B1 discloses a method, apparatus and article of manufacture for restoring a deteriorated signal to an undeteriorated signal. A deteriorated signal consists of a plurality of deteriorated and undeteriorated data points. For each deteriorated data point, a plurality of class types is created based upon characteristics of the area containing the deteriorated data point. The data point is classified with respect to one of the plurality of class types and assigned a corresponding input signal class. The undeteriorated signal is generated by adaptive filtering of the input signal in accordance with the input signal classification results. Created classes may includes a motion class, an error class, a spatial class or a spatial activity class. A spatial class is a collection of specific values used to describe the spatial characteristics of the target data. For example, Adaptive Dynamic Range Coding (ADRC) may be used for generation of each class as a spatial class. Other examples of spatial classification, including differential PCM, may be used.

US 2009/0161977 A1 discloses a blur amount class production section for use in removing blur from an input image. The blur amount class production section receives a plurality of blur removal images, each with a different blur removal amount. For each of the blur removal images, a feature is calculated. Of each of the features, a maximum is calculated. An ADRC code is calculated from the input image. Using the ADRC code, an upper limit is obtained, from which an threshold value is calculated. The maximum of each of the features is thresholded in accordance with the threshold value. Finally, the thresholding results are combined into a blur amount class code.

US 6,351,494 B1 discloses a method for restoring a deteriorated signal to an undeteriorated signal. A deteriorated signal consists of a plurality of deteriorated and undeteriorated data points. For each deteriorated data point, a plurality of class types including a motion vector class is created based upon characteristics of the area containing the deteriorated data point. The data point is classified with respect to one of the plurality of class types and assigned a corresponding input signal class. The undeteriorated signal is generated by adaptively filtering the deteriorated input signal in accordance with the input signal classification result. More than one classification method is used to create the plurality of class types. Created classes may include a motion class, an error class, a spatial class, a spatial activity class, or a motion vector class.

A problem of using one-bit ADRC is that it gives the same result for signals with steep and weak transients, leading to the application of a filter that increases the steepness of transients in both signals. This causes artefacts in the signal that already comprises steep transients. A problem of using differential PCM is that it may lead to a large range of class codes, increasing the number of different filters that need to be kept available.

### SUMMARY OF THE INVENTION

It is an object of the invention to provide methods, devices and a computer program of the types mentioned above, that allow for an efficient filtering of signal sections whilst avoiding the introduction of artefacts in signal sections that do not need to be provided with a much steeper transient.

This object is achieved by the method according to the invention, which includes:
determining a class of a section of the signal obtained as input, wherein the determination of the class includes calculating a signal section comprising at least a component representative of a derivative of at least a first order of the input signal section and applying a quantisation operation to the calculated signal section, wherein, in the quantisation operation, a quantisation step is adapted to a dynamic range of the calculated signal section; and
selecting a digital filter associated with the class from a plurality of available filters.

Because the determination of the class includes calculating a signal section comprising at least a component representative of a derivative of at least a first order of the input signal section and applying a quantisation operation to the calculated signal section, the presence or absence of steep transients in the signal section is taken into account in the classification process. Because a digital filter associated with the class is selected from a plurality of available filters, it is possible to use a different filter for signal sections with steep transients than for signal sections with less steep transients. Because the quantisation operation uses a quantisation step adapted to a dynamic range of the calculated signal section, the number of classes can be reduced, in the sense that the determination of the class can have only a limited range of outcomes. This makes the method efficient in terms of memory use. This could also be achieved by merely selecting a large quantisation step or using an entropy coding method. However, in case one were to use a large quantisation step, one would need to know the signal properties in advance, in order to avoid missing out too much detail. The quantisation step might be so large that all values of many calculated signal section would be the same. An entropy coding method is relatively difficult and relatively inefficient in its implementation. A code book must be stored, and this code book must be appropriate to the signal. The method of the invention can be implemented in hardware with only variable filter coefficients. It is sufficient that they are appropriate to the characteristics of the signal to be filtered.

In an embodiment, the quantisation operation comprises an n-bit adaptive dynamic range coding.

In particular, it can be the case that n = 1, so that the result of the class determination is a class code within a range of possible values that does not increase very rapidly with the number of samples of which the signal section is made up.

In an embodiment, the input signal section is obtained from an array of pixel data encoding a digital image.

This is an application for which the method is very suitable, because images are often blurred. A filter to sharpen up the image will increase the steepness of transients. It is thus necessary to limit the application of such filters to avoid local artefacts that will arise if the filter is applied to those areas of the image that are already in focus.

In one variant, the plurality of filters comprise isotropic filters.

This variant is suitable for compensating for camera focus blur, since camera focus blur is independent of direction. In one embodiment, the filters comprise isotropic filters that are each the inverse of a Gaussian filter, because camera focus blur can be modelled as the result of applying a Gaussian filter to a sharp image.

In a further variant, the digital image is comprised in a sequence of images and data representative of the sequence of images is obtained, and the input signal section is obtained by, for each of at least one pixel of the digital image, estimating a direction of motion of a region of the image comprising the pixel over a plurality of the sequence of images and selecting values of pixels positioned relative to the pixel along the direction of motion.

This variant is suitable for removing camera blur, i.e. blur due to motion of objects represented in the image. By obtaining signal sections aligned generally with the direction of motion, signal sections including image information "spread out" due to the motion are obtained, which can be filtered to restore the focus. Such a signal section is obtained for each of multiple pixels or image regions in the image, so that only areas blurred due to the motion of a particular object are brought into focus. Blur due to shaking of the camera is also corrected in the process, since, generally, a signal section will be obtained for each of a set of pixels or regions together covering the complete image.

A variant includes determining a magnitude of the motion of the region of the image comprising the pixel and selecting a certain number of pixels at mutual intervals dependent in size on the magnitude of the motion.

This variant has the effect that the filter aperture is automatically widened for fast-moving objects, of which the information is spread out wider. There is no need to provide separate filters. Moreover, it is not necessary to increase the length of the signal section in terms of the number of samples it contains. This keeps the number of class codes relatively low.

According to another aspect, the device for filtering a signal includes:
an input for receiving the signal;
a device component for determining a class of a section of the signal obtained as input, the device component including a signal processing component for calculating a signal section comprising at least a component representative of a derivative of at least a first order of the input signal section and a signal processing component for applying a quantisation operation to the calculated signal section, wherein the device is configured to implement the quantisation operation such that a quantisation step is adapted to a dynamic range of the calculated signal section; and
a switch for switching between a plurality of available digital filters.

The device can be implemented as a programmed microprocessor or as dedicated hardware, e.g. a field-programmable gate array (FPGA). Components can be functional, being implemented in one and the same device that is appropriately programmed to perform the function.

In an embodiment, the device is configured to carry out a method according to the invention.

According to another aspect of the invention, there is provided a device for rendering at least one image on a display, comprising an interface for receiving a signal encoding at least one image and a filter device for filtering a digital signal representative of the at least one image, wherein the filter device is constituted as a device for filtering a signal according to the invention.

According to another aspect, the method of obtaining filter coefficients of a plurality of filters according to the invention includes:
obtaining a plurality of test signal sections and associated target signal values, each test signal section associated with one of a plurality of classes;
for each class, optimising a set of filter coefficients of an associated filter such that filtered versions of the test signal sections associated with that class best approximate their associated target signal values; and
associating each optimised set of filter coefficients with a class code obtainable by:
   for any test signal section associated with the class associated with the optimised set of filter coefficients, calculating a signal section comprising at least a component representative of a derivative of at least a first order the test signal section and applying a quantisation operation to the calculated signal section, wherein, in the quantisation operation, a quantisation step is adapted to a dynamic range of the calculated signal section.

This method allows one to obtain optimised filter coefficients for a class-based filter without resulting in many classes. Moreover, the method provides filters appropriate for signal sections with steep gradients and those without. The method can be implemented without a priori knowledge of the signal characteristics of the test signal sections, due to the fact that, in the quantisation operation, a quantisation step is adapted to a dynamic range of the calculated signal section.

In an embodiment, the quantisation operation comprises an n-bit adaptive dynamic range coding.

In particular where n = 1, the number of class codes increases less rapidly with increasing test signal section length.

In an embodiment, the each test signal section is obtained from an array of pixel data encoding a digital image.

Thus, optimised filters for correcting blur in images are provided. The use of different filters for different classes of signal allows for only blurred images or blurred parts of images to be brought into focus. Parts or images that are already in focus are filtered differently. This method is relatively easy to implement, since test images can be used, rather than specially prepared signal sections comprised of only a few pixel values.

In an embodiment, the plurality of filters comprise isotropic filters.

This embodiment is suitable for providing optimal filters for correcting camera focus blur, in particular where isotropic filters that are the inverse of Gaussian filters are used.

In a further variant, the digital image is comprised in a sequence of images and data representative of the sequence of images is obtained, and wherein a test signal section is obtained by, for each of at least one pixel of the digital image, obtaining data representative of a direction of motion of a region of the image comprising the pixel over a plurality of the sequence of images and selecting values of pixels positioned relative to the pixel along the direction of motion.

An effect is that one can use a limited range of test images representing several differently moving objects to obtain the optimal filter coefficients for the filters of the various classes.

According to another aspect of the invention, there is provided a computer program including a set of instructions capable, when incorporated in a machine-readable medium, of causing a system having information processing capabilities to perform a method according to the invention.

### BRIEF DESCRIPTION OF THE DRAWINGS

The invention will be explained in further detail with reference to the accompanying drawings, in which:
Fig. 1 is a block diagram illustrating selected components of a digital television receiver provided with a device for filtering images;
Fig. 2 is a flow chart illustrating a method of filtering images to remove camera blur;
Fig. 3 is a diagram illustrating a selection of pixels from the vicinity of an image part with relatively little motion;
Fig. 4 is a diagram illustrating a selection of pixels from the vicinity of an image part with a relatively large degree of motion
Fig. 5 is a diagram illustrating calculations of class codes for a signal section with a relatively small gradient and for a signal section with a relatively steep gradient;
Fig. 6 is a diagram illustrating class code calculation using one-bit ADRC without a preceding differentiating step;
Fig. 7 is a diagram illustrating a method of reducing camera focus blur; and
Fig. 8 is a flow chart illustrating a method of obtaining filter coefficients for the filtering device of Fig. 1.

### DETAILED DESCRIPTION

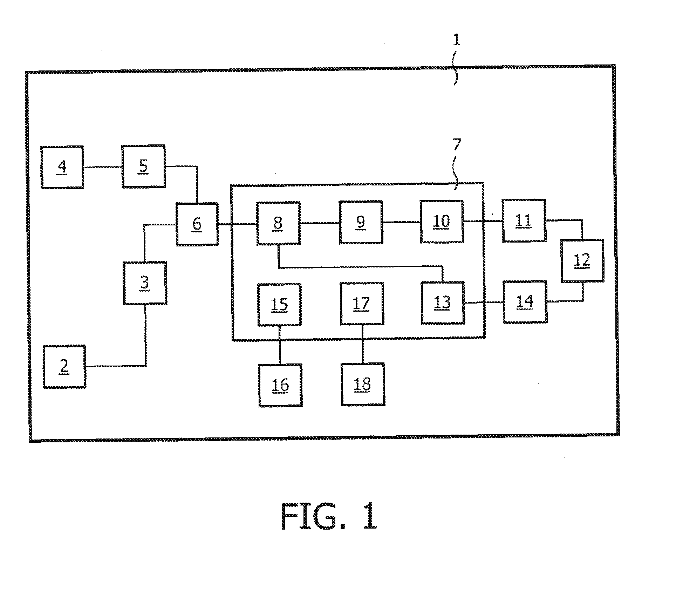

Fig. 1 illustrates by way of example a device for rendering a series of moving images in the form of a television set 1. It comprises a video decoder 2 for receiving a video input signal from e.g. a video recorder or DVD player, and an audio/video multiplexer 3. A broadcast television signal is received by a tuner/demodulator 4, converted into a data stream, e.g. in accordance with the MPEG-2 standard, and passed to a demultiplexer 5. Signals from the audio/video multiplexer 3 or the demultiplexer 5 are passed to a processing device 6 for de-interlacing, scaling and other data processing operations, such that a series of digital images, each represented by an array of pixel data, is made available to an image data processing device 7. The images are in high-definition television (HDTV) format in one embodiment.

The image data processing device 7 is arranged to filter the image data in a manner to be explained in more detail below. In an embodiment, the image data processing device 7 is a field-programmable gate array (FPGA) device, but it can also be an appropriately programmed general-purpose data processing device. In the illustrated embodiment, it is provided with a receiver 8 for receiving data representative of the series of images, a data processing unit 9 implementing the filter, and optionally implementing further image processing operations, and a column driver interface 10 for providing data to a column driver 11 of a display device 12. It is also provided with a timing unit 13 for providing data to a row driver 14 of the display device 12. The image data processing device 7 further comprises an interface 15 to a memory device 16, e.g. in the form of Random Access Memory (RAM) units, and an interface 17 to a programmable read-only memory unit 18 for retrieving parameter values for the algorithms implemented by the data processing unit 9. Such parameters can include filter coefficients of any of a plurality of filters available for use by the data processing unit.

The image data processing device 7 is arranged to carry out at least one of a method for reducing camera blur and a method of reducing focus blur.

Focus blur is unrelated to motion of objects represented in the images (or lateral motion of the camera). Focus blur can be approximated by an isotropic Gaussian blur filter. Focus blur reduction can increase the perceived static resolution of a display such as that of the television set 1.

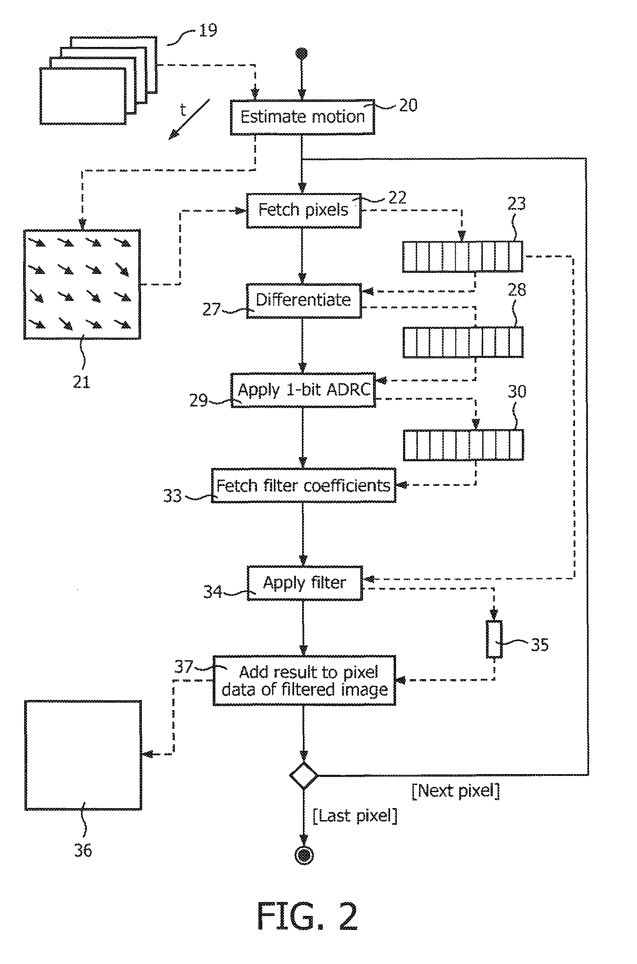

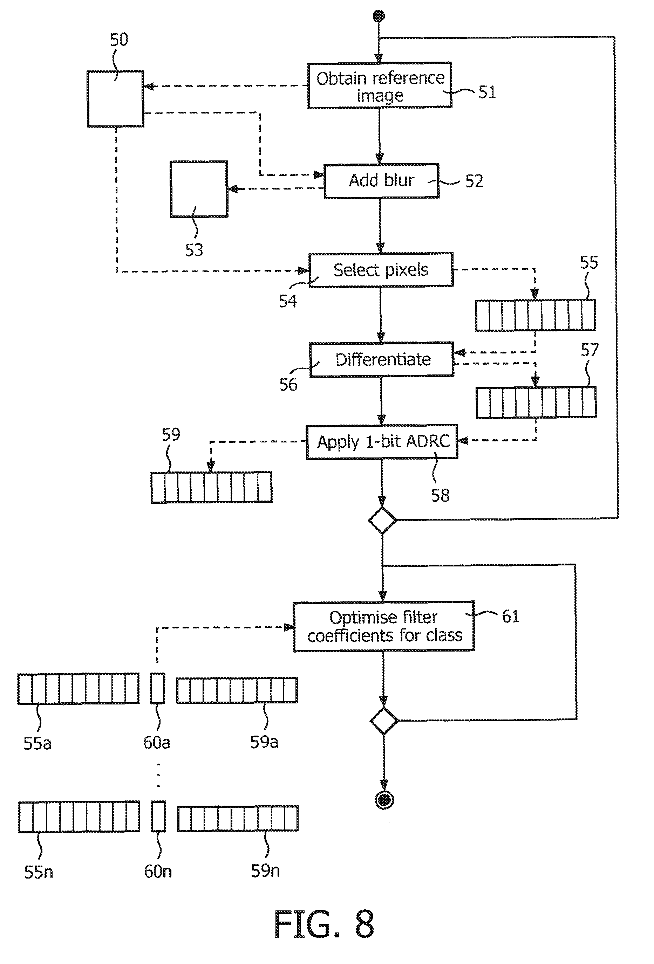

Camera blur in the present context means blur that is the result of movement whilst the shutter of the video camera is open. This blur reduces the perceived resolution of moving objects. Steep transients in the pixel data values become weaker due to the blurring, but only in the direction of movement. Camera blur can be modelled by a simple one-dimensional average filter, applied in the direction of movement. The aperture of this filter is equal to the blur width, which depends on the speed of motion of the object represented in the image and on the shutter time. Theoretically, it is possible to get rid of the camera blur by applying the inverse of a one-dimensional average filter in the direction of movement. However, every blur width would require a different filter, and the inverse filter can be extremely large, i.e. have a large number of filter taps. In the method to be outlined below with reference to Fig. 2, this problem is addressed by approximating the ideal filter for different blur widths using different filters, but also by motion-dependent sampling of pixels at different mutual distances, depending on the magnitude of the motion. To avoid having to use a filter with a very large number of taps, trained filters are used. The training process is illustrated in Fig. 8, and will be explained further below in with reference to that drawing.

In an implementation of a method of reducing focus blur, illustrated in Fig. 2, a sequence 19 of images is obtained, and each is filtered. For each image, a first step 20 of determining a motion vector is carried out for each pixel position or for each of a plurality of image regions that together cover the entire image. The result is an array 21 of motion vectors. A suitable method for motion vector determination is described in De Haan G. et al., "True motion estimation with 3-D recursive search block-matching", IEEE Trans. on Circ. and Systems for Video Technology, Vol. 3, October 1993, pp. 368-388.

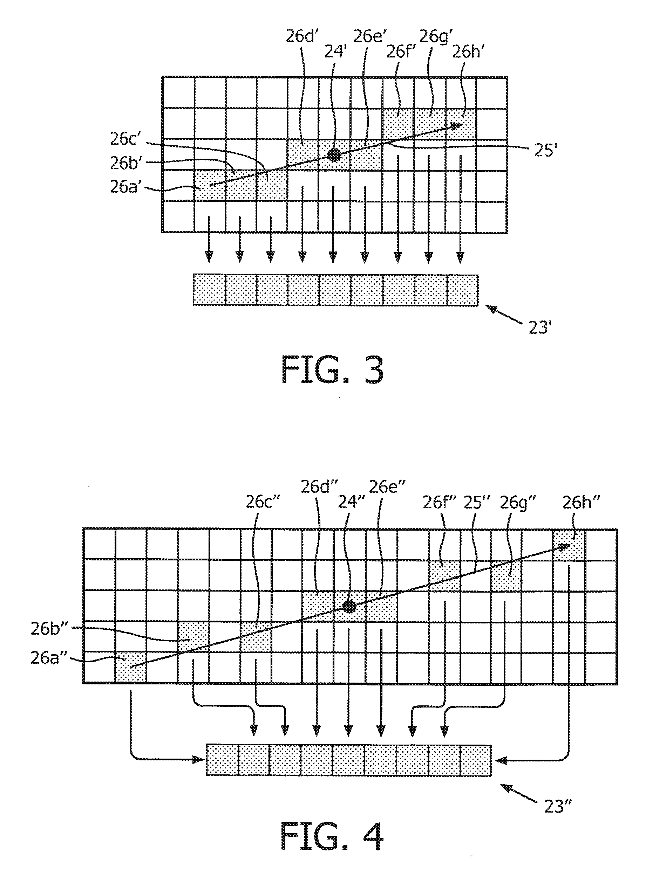

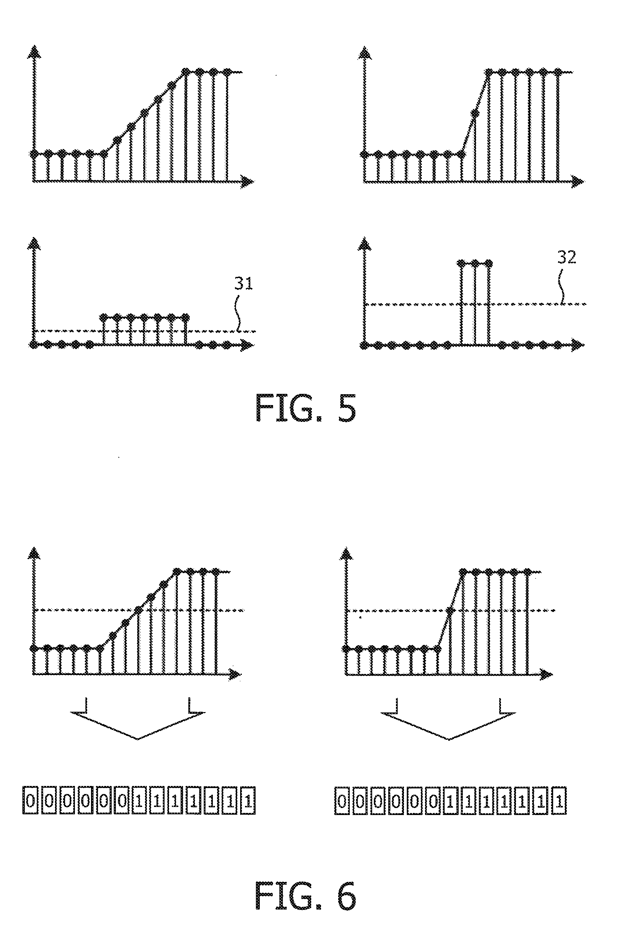

Then, for each pixel in the image, a motion-dependent pixel fetch is carried out (step 22). This step involves obtaining the motion vector for the pixel and selecting values of other pixels positioned relative to the pixel along the direction of motion, so as to obtain a first signal section 23 comprising a certain number of pixel values, in this example nine. As illustrated in Figs. 3 and 4, the pixel values correspond to pixel positions at mutual intervals dependent in size on the magnitude of the motion vector. Thus, in Fig. 4, where a pixel 24', the pixel being examined, is associated with a relatively small motion vector 25', further pixels 26'a-h close to each other are selected to form a first signal section 23'. Where, as in Fig. 5, a relatively large motion vector 25" is associated with a pixel 24", further pixels 26"a-h at greater intervals are selected to form a first signal section 23". Thus, if the motion vector 25 calculated for a pixel 24 spans more than the number of taps of the filters available to the image data processing device 7, subsampling is used to obtain the first signal section 23.

In the embodiment illustrated in Figs. 3 and 4, the motion vector 25 is centred on the pixel 24 under examination. If that pixel is right at the edge of the image, then mirroring can be applied to obtain a first signal section 23. Alternatively, the pixel values at the edge can be copied or the value zero can be used.

In a next step 27, a second signal section 28 comprising at least a component representative of a derivative of at least a first order of the first signal section 23 is calculated. In one embodiment, used here to explain the method, a discrete representation of the first derivative is calculated using difference quotients. In another embodiment, a representation of the second derivative or a higher-order derivative is calculated. In a variant, a, possibly weighted, sum of the representations of derivatives of different order is calculated. Calculating only a representation of the first-order derivative is easiest to implement and most accurate.

In a next step 29 (Fig. 2), one-bit adaptive dynamic range coding (ADRC) is applied to the second signal section 28, in order to obtain a class code 30. This type of coding uses only one bit per pixel. In an alternative embodiment, two-bit ADRC is used, but this would result in more possible class codes.

The steps for ADRC using one bit per pixel are as follows (not illustrated separately in the drawings):
1. Determine the maximum and minimum value within an aperture (i.e. within the second signal section 28).
2. Subtract the minimum value from the maximum value to determine the dynamic range of the second signal section 28.
3. Calculate an ADRC threshold, which is equal to the sum of the minimum value and half the dynamic range.
4. Determine a bit value for each sample value of the second signal section 28. The bit value is zero if the sample value is below the threshold and one if it is above the threshold.
5. Concatenate all the bit values to obtain the class code 30.

Fig. 5 illustrates the process for a first signal section with a weak gradient (the top left-hand diagram), which is converted into a second signal section (the lower left-hand diagram) with relatively many pixel values above a relatively low first threshold value 31. A first signal section with a steep gradient (the top right-hand diagram) is converted into a second signal section with relatively few sample values with relatively high values (the lower right-hand diagram) above a relatively high threshold value 32.
Thus, the class code in the situation shown in the two diagrams on the left of Fig. 5 will be "000001111111000" and the class code in the situation shown in the two diagrams on the right of Fig. 5 will be "000000011100000". In this illustration, class codes are fifteen bits long, corresponding to first signal sections 23 containing fifteen pixel values.

Fig. 6 shows what would happen if the differentiation step 27 were to have been omitted. As can be seen, the class codes that would have been calculated using one-bit ADRC would have been exactly the same for the first signal section shown on the left-hand side of Fig. 6 as for the first signal section shown on the right-hand side of Fig. 6. Because the class code 30 is used to select one of a plurality of available digital filters (step 33 of Fig. 2), the two signal sections would have been filtered in the same way.

Thus, the step 27 (Fig. 2) of differentiating the first signal section 23 to obtain the second signal section 28 allows one to assign different class codes to a first signal section 23 with a steep transient than to one with a weak transient, without having to increase the number of bits used in the ADRC coding.

The step 33 of selecting one of a plurality of available filters involves using the class code 30 as a key for retrieving an associated set of filter coefficients from a table stored in the programmable memory unit 18. Subsequently, a filter operation using those filter coefficients is applied to the first signal section 23 to obtain a single filtered pixel value 35, which is entered into an array 36 of pixel values representing a filtered image (step 37). These steps 22,27,29,33,34 are repeated for each pixel in the input image.

Because the filtering is blur-aware, it will not reduce more blur than is needed, regardless of the amount of movement of the object with the blurred representation. This will, for example, prevent unnecessary filtering on fast-moving objects that were shot with a high shutter speed. Because of the directional pixel fetch, the filtering can be one-dimensional, which saves resources compared to two-dimensional filtering.

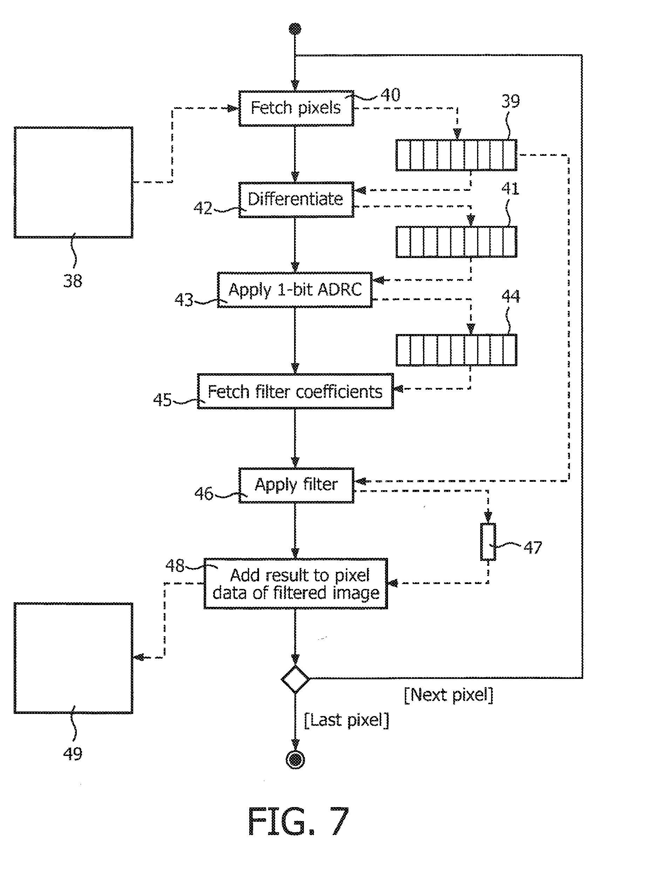

A method of reducing focus blur, i.e. enhance the general sharpness of an input image 38, is illustrated in a first variant in Fig. 7. It is similar to the method of Fig. 2, except that the motion-estimation step 20 is omitted.

In the illustrated embodiment, a first signal section 39 is assembled for each pixel in the input image 38 by fetching pixel values of pixels in the vicinity of the pixel (step 40). In this case, the sampling interval is the same for each first signal section 39, and it may be the same interval between all pixels of such a first signal section 39. In one embodiment, the samples are taken along a row of the input image 38. In another embodiment, they are taken along a column. They may also be taken along a diagonal direction. In yet another embodiment, the method of Fig. 7 is carried out twice, pixel values being fetched along a row in one run and along a column in another run. This has the effect that one can still carry out one-dimensional filtering.

It is noted that an alternative embodiment to the one illustrated in Fig. 7 comprises fetching a two-dimensional array of pixels to form the first signal section 23. In this embodiment, a two-dimensional filter is selected from among a plurality of available two-dimensional filters in accordance with a class code. The class code is then calculated by calculating a second signal section comprising at least a component representative of a two-dimensional derivative of at least a first order of the first signal section. This embodiment is good at reducing focus blur, but can be computationally expensive.

Returning to the illustrated embodiment, a second signal section 41 representative of a derivative of the first signal section 39 is calculated (step 42), to which one-bit ADRC is then applied (step 43). The result is a class code 44, which is used to select one of a plurality of (in this case one-dimensional) filters by fetching associated filter coefficients (step 45) from the programmable memory unit 18. The filter is applied (step 46) to the first signal section 39, to obtain a filtered pixel value 47. The filtered pixel value 47 is added (step 48) to an array 49 of pixel values representing a filtered image.

It has been mentioned that the filter coefficients are fetched from the programmable memory unit 18, where they are stored on manufacturing or updating the television set 1. A method to calculate filter coefficients sets for the different filters is illustrated in Fig. 8. It can be carried out on a general-purpose computer (not shown).

The method uses a set of at least one reference image 50. For each reference obtained (step 51), blur is added (step 52), to obtain a test image 53.

If the method of Fig. 8 is being used to obtain filter coefficients for implementing the method of Fig. 2, blur corresponding to a moving object (camera blur) is added. In the illustrated embodiment, blur corresponding to a moving object with a particular speed and direction is added. In embodiments in which one or only few test images 53 are used, blur can be added locally to differing extents at multiple locations within the reference image 50. In another embodiment, blur corresponding to a moving object with a particular speed and direction is added uniformly throughout the entire reference image 50. This embodiment is illustrated in Fig. 8.

Then (step 54) pixels in the neighbourhood of a pixel at a certain position are fetched to form a test signal section 55, associated with a target pixel value corresponding to the value of the pixel at the certain position in the reference image 50.

Where the object of the method of Fig. 8 is to obtain filter coefficients for implementing the method of Fig. 2, the pixels are fetched along a motion vector. In an embodiment, this can include first calculating the motion vector using the methods outlined above in connection with the first step 20 of the method of Fig. 2. In any case, the pixels are fetched at mutual intervals dependent in size on the magnitude of the motion vector.

Where the object of the method of Fig. 8 is to obtain filter coefficients for implementing the method of Fig. 7, the pixels are fetched along a certain fixed direction, e.g. a horizontal, vertical or diagonal direction.

Subsequently (step 56), a second signal section 57 is obtained that comprises at least a component representative of a derivative of at least a first order of the test signal section 55.

One-bit ADRC is applied (step 58) to the second signal section 57 to obtain a class code 59.

These steps 51,52,54,56,58 are repeated to obtain a set of test signal sections 55a-n, associated target signal values 60a-n and associated class codes 59a-n. They are repeated as often as necessary until sufficiently many test signal sections 55a-n of each class code are available. In an embodiment, at least a pre-determined minimum number of test signal sections 55a-n are generated that are also sufficiently different. This ensures that the filter coefficients of each class are not all the same. In an embodiment, if certain class code values do not occur often enough, an optimal set of filter coefficients is not determined for that class. Instead, a pre-determined set of filter coefficients is associated with that class. This can be a set of coefficients that defines a filter that passes all signals without change.

The data sets representing the set of test signal sections 55a-n, associated target signal values 60a-n and associated class codes 59a-n serve as training data for a step 61 in which optimal filter coefficients are obtained for each class represented by a class code. The optimisation step 61 uses e.g. a least-squares method to minimise for each class the root of the sum of the squares of the differences between the filtered test signal sections 55 and their associated target signal values 60 associated with the class. Such optimisation methods are known *per se,* e.g. from US 6,192,161 B 1.

The final step 61 is repeated for each class code, so as to obtain a plurality of sets of filter coefficients for making available a plurality of filters for use in a method according to Fig. 2 or a method according to Fig. 7.

It should be noted that the above-mentioned embodiments illustrate, rather than limit, the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The mere fact that certain measures are recited in mutually different dependent claims does not indicate that a combination of these measures cannot be used to advantage.

Although the invention has been described in a hardware implementation in a television set 1, it will be appreciated that it could also be implemented in software applications like those for image enhancement and video editing. In addition, it is not necessary to obtain a sequence of images to carry out the method illustrated herein, so that it can be applied to digital photographs as well.

## Claims

1. Method of filtering a signal, including:
determining a class of a section (23;39) of the signal obtained as input;
selecting a digital filter associated with the class from a plurality of available filters; and filtering of the input signal section (23;39) with the selected digital filter; **characterised in that** the determination of the class of a section includes calculating a signal section (28;41) comprising at least a component representative of a derivative of at least a first order of the input signal section (23;39) and applying a quantisation operation to the calculated signal section (28;41), wherein, in the quantisation operation, a quantisation step is adapted to a dynamic range of the calculated signal section (28;41).

2. Method according to claim 1, wherein the quantisation operation comprises an n-bit adaptive dynamic range coding.

3. Method according to claim 1, wherein the input signal section (28;41) is obtained from an array of pixel data encoding a digital image (38).

4. Method according to claim 3, wherein the plurality of filters comprise isotropic filters.

5. Method according to claim 3, wherein the digital image is comprised in a sequence (19) of images and data representative of the sequence of images (19) is obtained, and wherein the input signal section (23;39) is obtained by, for each of at least one pixel (24';24") of the digital image, estimating a direction of motion of a region of the image comprising the pixel (24';24") over a plurality of the sequence (19) of images and selecting values of pixels (26'a-h;26"a-h) positioned relative to the pixel (24';24") along the direction of motion.

6. Method according to claim 5, including determining a magnitude of the motion of the region of the image comprising the pixel (24';24") and selecting a certain number of pixels (26'a-h;26"a-h) at mutual intervals dependent in size on the magnitude of the motion.

7. Device for filtering a signal, including:
an input (8) for receiving the signal;
a device component for determining a class of a section (23;39) of the signal obtained as input, the device component including a signal processing component (9) for calculating a signal section (28;41) comprising at least a component representative of a derivative of at least a first order of the input signal section (23;39) and a signal processing component (9) for applying a quantisation operation to the calculated signal section (28;41), wherein the device is configured to implement the quantisation operation such that a quantisation step is adapted to a dynamic range of the calculated signal section (28;41); and
a switch for switching between a plurality of available digital filters.

8. Device according to claim 7, configured to carry out a method according to any one of claims 1- 6.

9. Device for rendering at least one image on a display, comprising an interface (2,4) for receiving a signal encoding at least one image and a filter device (7) for filtering a digital signal representative of the at least one image, wherein the filter device (7) is constituted according to claim 7 or 8.

10. Method of obtaining filter coefficients of a plurality of filters, including:
obtaining a plurality of test signal sections (55a-n) and associated target signal values (60a-n), each test signal section (55a-n) associated with one of a plurality of classes;
for each class, optimising a set of filter coefficients of an associated filter such that filtered versions of the test signal sections (55a-n) associated with that class best approximate their associated target signal values (60a-n); **characterised by**
associating each optimised set of filter coefficients with a class code (59) obtainable by calculating, for any test signal section (55) associated with the class associated with the optimised set of filter coefficients, a signal section (57) comprising at least a component representative of a derivative of at least a first order the test signal section (55) and applying a quantisation operation to the calculated signal section (57), wherein, in the quantisation operation, a quantisation step is adapted to a dynamic range of the calculated signal section (57).

11. Method according to claim 10, wherein the quantisation operation comprises an n-bit adaptive dynamic range coding.

12. Method according to claim 10, wherein the each test signal section (55) is obtained from an array of pixel data encoding a digital image (50).

13. Method according to claim 12, wherein the plurality of filters comprise isotropic filters.

14. Method according to claim 12, wherein the digital image (50) is comprised in a sequence of images and data representative of the sequence of images is obtained, and wherein a test signal section (55) is obtained by, for each of at least one pixel of the digital image (50), obtaining data representative of a direction of motion of a region of the image (50) comprising the pixel over a plurality of the sequence of images and selecting values of pixels positioned relative to the pixel along the direction of motion.

15. Computer program including a set of instructions capable, when incorporated in a machine-readable medium, of causing a system having information processing capabilities to perform a method according to any one of claims 1-6 or claims 10-14.

## Patentansprüche

1. Verfahren zum Filtern eines Signals, welches folgende Schritte aufweist:
Bestimmen einer Klasse eines Abschnitts (23; 39) des als Eingabe erhaltenen Signals,
Auswählen eines digitalen Filters in Zusammenhang mit der Klasse aus mehreren verfügbaren Filtern und
Filtern des Eingangssignalabschnitts (23; 39) mit dem ausgewählten digitalen Filter,
**dadurch gekennzeichnet, dass**
die Bestimmung der Klasse eines Abschnitts aufweist:
Berechnen eines Signalabschnitts (28; 41), der mindestens eine Komponente aufweist, die eine Ableitung mindestens erster Ordnung des Eingangssignalabschnitts (23; 39) repräsentiert, und Anwenden einer Quantisierungsoperation auf den berechneten Signalabschnitt (28; 41), wobei bei der Quantisierungsoperation ein Quantisierungsschritt an einen Dynamikbereich des berechneten Signalabschnitts (28; 41) angepasst wird.

2. Verfahren nach Anspruch 1, wobei die Quantisierungsoperation eine adaptive n-Bit-Dynamikbereichscodierung aufweist.

3. Verfahren nach Anspruch 1, wobei der Eingangssignalabschnitt (28; 41) von einem Array von ein digitales Bild (38) codierenden Pixeldaten erhalten wird.

4. Verfahren nach Anspruch 3, wobei die mehreren Filter isotrope Filter aufweisen.

5. Verfahren nach Anspruch 3, wobei das digitale Bild in einer Sequenz (19) von Bildern enthalten ist und die Sequenz von Bildern (19) repräsentierende Daten erhalten werden und wobei der Eingangssignalabschnitt (23; 39) erhalten wird durch für jedes von mindestens einem Pixel (24'; 24") des digitalen Bilds erfolgendes Schätzen der Bewegungsrichtung eines Bereichs des das Pixel (24'; 24") aufweisenden Bilds über mehrere von der Sequenz (19) von Bildern und Auswählen von Werten von Pixeln (26'a-h; 26"a-h), die in der Bewegungsrichtung in Bezug auf das Pixel (24'; 24") positioniert sind.

6. Verfahren nach Anspruch 5, bei dem der Betrag der Bewegung des Bereichs des das Pixel (24'; 24") aufweisenden Bilds bestimmt wird und eine bestimmte Anzahl von Pixeln (26'a-h; 26"a-h) in von der Größe des Bewegungsbetrags abhängigen Intervallen zueinander ausgewählt wird.

7. Vorrichtung zum Filtern eines Signals, welche aufweist:
einen Eingang (8) zum Empfangen des Signals,
eine Vorrichtungskomponente zum Bestimmen einer Klasse eines Abschnitts (23; 39) des als Eingabe erhaltenen Signals, wobei die Vorrichtungskomponente aufweist: eine Signalverarbeitungskomponente (9) zum Berechnen eines Signalabschnitts (28; 41), der mindestens eine Komponente aufweist, die eine Ableitung mindestens erster Ordnung des Eingangssignalabschnitts (23; 39) repräsentiert, und eine Signalverarbeitungskomponente (9) zum Anwenden einer Quantisierungsoperation auf den berechneten Signalabschnitt (28; 41), wobei die Vorrichtung konfiguriert ist, die Quantisierungsoperation zu implementieren, so dass ein Quantisierungsschritt an einen Dynamikbereich des berechneten Signalabschnitts (28; 41) angepasst wird, und
einen Schalter zum Schalten zwischen mehreren verfügbaren digitalen Filtern.

8. Vorrichtung nach Anspruch 7, welche konfiguriert ist, um ein Verfahren nach einem der Ansprüche 1 bis 6 auszuführen.

9. Vorrichtung zum Rendern mindestens eines Bilds auf einer Anzeige, welche aufweist: eine Schnittstelle (2, 4) zum Empfangen eines Signals, welches mindestens ein Bild codiert, und eine Filtervorrichtung (7) zum Filtern eines das mindestens eine Bild repräsentierenden Digitalsignals, wobei die Filtervorrichtung (7) nach Anspruch 7 oder 8 aufgebaut ist.

10. Verfahren zum Erhalten von Filterkoeffizienten mehrerer Filter, welches folgende Schritte aufweist:
Erhalten mehrerer Testsignalabschnitte (55a-n) und zugeordneter Zielsignalwerte (60a-n), wobei jeder Testsignalabschnitt (55a-n) einer von mehreren Klassen zugeordnet wird, Optimieren, für jede Klasse, eines Satzes von Filterkoeffizienten eines zugeordneten Filters, so dass gefilterte Versionen der Testsignalabschnitte (55a-n) in Zusammenhang mit dieser Klasse ihre zugeordneten Zielsignalwerte (60a-n) am besten annähern,
**gekennzeichnet durch**
Zuordnen jedes optimierten Satzes von Filterkoeffizienten zu einem Klassencode (59), der erhalten werden kann **durch** Berechnen, für jeden Testsignalabschnitt (55) in Zusammenhang mit der Klasse, die dem optimierten Satz von Filterkoeffizienten zugeordnet ist, eines Signalabschnitts (57), der mindestens eine Komponente aufweist, welche eine Ableitung mindestens erster Ordnung des Testsignalabschnitts (55) repräsentiert, und Anwenden einer Quantisierungsoperation auf den berechneten Signalabschnitt (57), wobei bei der Quantisierungsoperation ein Quantisierungsschritt an einen Dynamikbereich des berechneten Signalabschnitts (57) angepasst wird.

11. Verfahren nach Anspruch 10, wobei die Quantisierungsoperation eine adaptive n-Bit-Dynamikbereichscodierung aufweist.

12. Verfahren nach Anspruch 10, wobei jeder Testsignalabschnitt (55) von einem Array von ein digitales Bild (50) codierenden Pixeldaten erhalten wird.

13. Verfahren nach Anspruch 12, wobei die mehreren Filter isotrope Filter aufweisen.

14. Verfahren nach Anspruch 12, wobei das digitale Bild (50) in einer Sequenz von Bildern enthalten ist und die Sequenz von Bildern repräsentierende Daten erhalten werden, und wobei ein Testsignalabschnitt (55) erhalten wird durch für jedes von mindestens einem Pixel des digitalen Bilds (50) erfolgendes Erhalten von Daten, welche die Bewegungsrichtung eines Bereichs des Bilds (50) repräsentieren, welches das Pixel aufweist, über mehrere von der Sequenz von Bildern und Auswählen von Werten von Pixeln, die in Bewegungsrichtung in Bezug auf das Pixel positioniert sind.

15. Computerprogramm mit einem Satz von Befehlen, wodurch, wenn es in ein maschinenlesbares Medium aufgenommen ist, ein System mit Informationsverarbeitungsfähigkeiten veranlasst wird, ein Verfahren nach einem der Ansprüche 1 bis 6 oder 10 bis 14 auszuführen.

## Revendications

1. Procédé de filtrage d'un signal, comprenant :
- la détermination d'une classe d'une section (23, 39) du signal obtenu comme entrée ;
- la sélection d'un filtre numérique associé à la classe à partir d'une pluralité de filtres disponibles ;
- et le filtrage de la section du signal d'entrée (23, 39) avec le filtre numérique sélectionné ; **caractérisé en ce que** la détermination de la classe d'une section comprend le calcul d'une section de signal (28, 41) comprenant au moins un composant représentatif d'une dérivée d'au moins du premier ordre de la section du signal d'entrée (23, 39) et l'application d'une opération de quantification à la section de signal calculée (28, 41), dans lequel lors de l'opération de quantification, une étape de quantification est adaptée à une gamme dynamique de la section de signal calculée (28, 41).

2. Procédé selon la revendication 1, dans lequel l'opération de quantification comprend un codage de gamme dynamique adaptative de n-bits.

3. Procédé selon la revendication 1, dans lequel la section de signal d'entrée (28, 41) est obtenue à partir d'une série de données pixel codant pour une image numérique (38).

4. Procédé selon la revendication 3, dans lequel la pluralité de filtres comprend des filtres isotropes.

5. Procédé selon la revendication 3, dans lequel l'image numérique est comprise dans une séquence (19) d'images et des données représentatives de la séquence d'images (19) sont obtenues, et dans lequel la section du signal d'entrée (23, 39) est obtenue, pour au moins chaque pixel (24' ; 24") de l'image numérique, en évaluant une direction du mouvement de la région de l'image comprenant le pixel (24', 24") par rapport à une pluralité de la séquence (19) d'images et en sélectionnant des valeurs de pixels (26'a-h ; 26"a-h) positionnés par rapport au pixel (24' ; 24") dans le sens de la direction du mouvement.

6. Procédé selon la revendication 5, incluant la détermination de l'ampleur du mouvement de la région de l'image comprenant le pixel (24' ; 24") et la sélection d'un certain nombre de pixels (26'a-h ; 26"a-h) à des intervalles mutuels dont la taille dépend de l'ampleur du mouvement.

7. Appareil pour filtrer un signal, incluant :
une entrée (8) pour recevoir le signal ;
un composant de l'appareil pour déterminer une classe d'une section (23, 39) du signal obtenu comme entrée, le composant de l'appareil incluant un composant de traitement de signal (9) pour calculer une section de signal (28, 41) comprenant au moins un composant représentatif d'une dérivée d'au moins du premier ordre de la section du signal d'entrée (23, 39) et un composant de traitement de signal (9) pour effectuer une opération de quantification à la section de signal calculée (28, 41), dans lequel l'appareil est configuré pour mettre en oeuvre l'opération de quantification de façon à ce qu'une étape de quantification est adaptée à une gamme dynamique de la section de signal calculée (28, 41) ; et
un commutateur pour commuter entre une pluralité de filtres numériques disponibles.

8. Appareil selon la revendication 7, configuré pour effectuer un procédé selon l'une quelconque des revendications 1-6.

9. Appareil destiné à rendre au moins une image sur un écran, comprenant une interface (2, 4) pour recevoir un signal codant au moins pour une image et un appareil de filtrage (7) pour filtrer un signal numérique représentant au moins une image, dans lequel l'appareil de filtrage (7) est constitué selon la revendication 7 ou 8.

10. Procédé d'obtention de coefficients de filtrage d'une pluralité de filtres, incluant :
l'obtention d'une pluralité de sections de signal d'essai (55a-n) et des valeurs de signal cible associé (60a-n), chaque section de signal d'essai (55a-n) associée avec l'une des pluralités de classes ; pour chaque classe, l'optimisation d'un ensemble de coefficients de filtrage d'un filtre associé, de façon à ce que les versions filtrées des sections de signal d'essai (55a-n) associées avec cette classe avoisinent le mieux possible les valeurs de leur signal cible associé (60a-n), **caractérisé par** l'association de chaque ensemble de coefficients de filtrage optimisés avec un code de classe (59) susceptible d'être obtenu en calculant n'importe quelle section de signal d'essai (55) associée avec la classe associée avec l'ensemble de coefficients de filtrage optimisés, une section de signal (57) comprenant au moins un composant représentatif d'une dérivée d'au moins du premier ordre de la section de signal d'essai (55) et l'application d'une opération de quantification à la section du signal calculé (57), dans lequel, lors de l'opération de quantification, une étape de quantification est adaptée à une gamme dynamique de la section du signal calculé (57).

11. Procédé selon la revendication 10, dans lequel l'opération de quantification comprend un codage de gamme dynamique adaptative de n-bits.

12. Procédé selon la revendication 10, dans lequel chaque section de signal d'essai (55) est obtenue à partir d'une série de données pixel codant pour une image numérique (50).

13. Procédé selon la revendication 12, dans lequel la pluralité de filtres comprend des filtres isotropes.

14. Procédé selon la revendication 12, dans lequel l'image numérique (50) est comprise dans une séquence d'images et des données représentatives d'une séquence d'images sont obtenues, et dans lequel la section de signal d'essai (55) est obtenue, pour au moins chaque pixel de l'image numérique (50), par l'obtention de données représentatives de la direction du mouvement de la région de l'image (50) comprenant le pixel par rapport à une pluralité de la séquence d'images et la sélection des valeurs de pixels positionnés par rapport au pixel dans le sens de la direction du mouvement.

15. Programme d'ordinateur incluant un ensemble d'instructions capable, quand elles sont incorporées dans un support lisible par une machine, de déclencher dans un système ayant des capacités de traitement de l'information la mise en oeuvre d'un procédé selon l'une quelconque des revendications 1-6 ou des revendications 10-14.
